Europäisches Patentamt

European Patent Office

Office européen des brevets

(19)

(11) Publication number: **0 229 170 B1**

(12) **EUROPEAN PATENT SPECIFICATION**

(45) Date of publication of patent specification: **16.02.94**   (51) Int. Cl.5: **H04M 1/64**, H04M 11/00

(21) Application number: **86904668.0**

(22) Date of filing: **08.07.86**

(86) International application number:
**PCT/US86/01468**

(87) International publication number:
**WO 87/00375 (15.01.87 87/01)**

Divisional application 93110671.0 filed on
08/07/86.

(54) **STATISTICAL ANALYSIS SYSTEM AND METHOD FOR USE WITH PUBLIC COMMUNICATION FACILITY.**

(30) Priority: **10.07.85 US 753299**

(43) Date of publication of application:
**22.07.87 Bulletin 87/30**

(45) Publication of the grant of the patent:
**16.02.94 Bulletin 94/07**

(84) Designated Contracting States:
**AT BE CH DE FR GB IT LI NL SE**

(56) References cited:
**EP-A- 0 032 410**
**US-A- 4 071 698**

(73) Proprietor: **FIRST DATA RESOURCES INC.**
**10825 Farnum Drive**
**Omaha Nebraska 68154(US)**

(72) Inventor: **Katz, Ronald Alan**
**570 South Mapleton Drive**
**Los Angeles California 90024(US)**

(74) Representative: **Coles, Graham Frederick et al**
**Graham Coles & Co.**
**24 Seeleys Road**
**Beaconsfield Buckinghamshire HP9 1SZ**
**(GB)**

## Description

This invention relates to methods and systems for data-analysis, of the kind in which calls from a multiplicity of terminals of a communications facility are received at a receiving station, automated voice response to each call is made from the receiving station to the calling terminal prompting the caller to transmit digital-signal data to the receiving station via the communications facility, digital-signal data transmitted via the communications facility by the caller in response to the prompting is received at the receiving station for processing, this digital-signal data is stored at the receiving station in association with a caller-identification, and the data stored in relation to a multiplicity of calls is analyzed.

A method and system of this specified kind are known from US-A-4 071 698 in the context of a marketing operation conducted over the public telephone network. In such operation, calling customers individually request that a selected audio recording, which may itself be one of the products marketed or may simply be representative of a service or other product offered, is played to him/her over the telephone line for demonstration or other presentational purposes, before an order is placed by the customer. When the customer calls, he/she is prompted by automated voice messages that may lead him/her step by step through successive stages of data entry in automatic, computer processing of the call.

In the stage-by-stage processing of the call, the caller is instructed to key in through operation of the push-buttons of his/her telephone instrument, data concerning his/her account, and then, once this account information has been verified, is invited to key in a code identifying the selection of product or service for which audio demonstration or other presentation is required.

Following the presentation, the customer receives automated instructions for keying in data for ordering the relevant product or service. The data keyed in by the customer is recorded in order to maintain inventory records and for the purpose of determining trends, and also for maintaining an historical record in relation to each customer from which, for example, the customer's preferences can be determined.

It is an object of the present invention to provide a method and system of the said specified kind, that offers improvement over what is known from US-A-4 071 698 for, in particular, fuller data-analysis of calls.

According to one aspect of the present invention, a method of data-analysis of the said specified kind is characterised in that the caller-identification and the prompted-response data of each call are stored in a memory file or cell that is assigned individually to the caller, that a digital representation in accordance with the timing or other sequence-order of the individual call is derived and stored in that cell, and that the analysis is related to the contents of the individual memory cells such as to isolate a subset of the callers.

According to another aspect of the present invention, a system for data analysis of the said specified kind is characterised in that the receiving station includes memory means having a plurality of memory files or cells and means to assign the memory cells to individual callers and to store the caller-identification and the prompted-response data received in each individual call in the memory cell assigned to the caller, that means at the receiving station derives a digital representation in accordance with the timing or other call sequence-order of each call and enters that representation into the memory cell assigned to the caller, and that programmed means carries out said analysis in accordance with the contents of the individual memory cells such as to isolate a subset of the callers.

The combination of characterising features of the method, and of the system of the present invention, is of special advantage for the carrying out of statistical analyses based on the calls made. The assignment of memory files or cells to the callers individually, and the storage of the data and the caller-identification received in respect of each caller in the file or cell individual to him/her, together with the digital representation in accordance with the timing or other sequence-order of the individual call, facilitates the carrying out of analysis. The storage of the representation of the timing or other sequence-order of the call in a file or cell individual to the caller is especially advantageous.

An automated method and system for entering a stake in a lottery, using the public telephone network and involving storage of information concerning each caller and data entered by him/her, is known from EP-A-0 032 410. However, in this, as with what is disclosed in US-A-4 071 698, there is no storage of a timing or sequence-order representation in a file or cell individually allocated to the caller.

In the method and the system of the present invention, the caller may be prompted to transmit to the receiving station a key code made known to the caller other than during the call, and in this case the further prompting of the caller may be dependent upon whether the key code transmitted by the caller satisfies a predetermined condition. More especially, the key code may be checked to determine whether it has correspondence with any of a multiplicity of key codes which are stored at the receiving station and which are available for use to satisfy the required condition, on a restricted basis.

Where the public telephone network is used, each caller may be prompted to transmit to the receiving station the telephone number from which he/she is calling, and in this case further prompting of the caller may be dependent upon whether the transmitted number is found to be valid.

Each call made may be assigned a respective call designation number in the receiving station, and the designation number assigned to each individual call may then be stored in the memory cell individual to the respective caller and communicated to the caller from the receiving station during the call. The call designation number may be derived in the receiving station in dependence upon the timing or other sequence-order representation of that call.

The receiving station may prompt the caller in respect of each call for which data has been stored in an assigned memory cell, to transmit back to the receiving station an acknowledgement code specified in the prompting, and may then check that the caller does indeed act as prompted. The acknowledgement code specified may be derived in the receiving station in dependence upon the timing or other sequence-order representation of the respective call, and the digital-signal data received in respect of each call may be retained as recorded data at the end of the call only in the event that the receiving station receives the acknowledgement code as prompted, from the caller.

An example of a system, and its method of operation, in accordance with the present invention, will now be described with reference to the accompanying drawings, in which:

FIGURE 1 is a block diagram of a system constructed in accordance with the present invention;

FIGURE 2 is a fragmentary diagrammatic representation of a storage cell in the system of FIGURE 1; and

FIGURE 3 is a flow diagram of an operating format of the system of FIGURE 1.

## Description of the Illustrative Embodiment

As required, a detailed illustrative embodiment of the present invention is disclosed herein. However, physical communication systems, data formats, and operating structures in accordance with the present invention may be embodied in a wide variety of forms, some of which may be quite different from those of the disclosed embodiment. Consequently, the specific structural and functional details disclosed herein are merely representative; yet in that regard, they are deemed to afford the best embodiment for purposes of disclosure and to provide a basis for the claims herein which define the scope of the present invention.

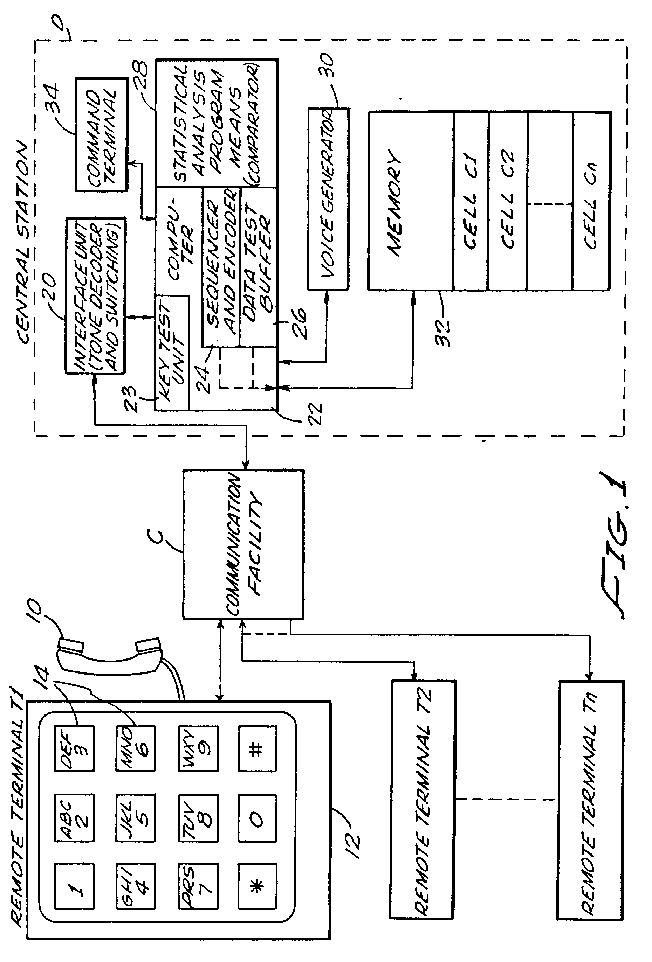

Referring initially to FIGURE 1, a series of remote terminals T1 through Tn are represented (left). The terminals are generally similar, and accordingly, only the terminal T1 is illustrated in detail. In the disclosed embodiment, the remote terminals T1 through Tn comprise telephone terminals coupled to a communication facility C which may take the form of a comprehensive telephone system for interconnecting any associated terminals. The communication facility C is also coupled to a data development station D in accordance herewith, which is illustrated in some detail.

Generally in accordance with the present development, individual callers use the individual telephone stations T1 through Tn to interface the data development station D through the communication facility C. Also in accordance herewith, the data of individual callers is collected and correlated in the data station D for processing in accordance with external data. As a consequence, a select subset of the callers are isolated and specifically identified.

Several polling or informing operations can be performed utilizing systems in accordance herewith. For example, the public might be polled with regard to locating the specific purchasers of a defective and dangerous product. The public might be polled with the objective of locating persons susceptible to a specific ailment or disease. In a less serious vein, but one of particular commercial significance, the system also might be employed in various public communication game formats or, where legal and deemed in the public welfare, public lotteries.

Considering the system of FIGURE 1 in somewhat greater detail, it is to be understood that the communication facility C has multiplexing capability for individually coupling the terminals T1-Tn to the central station C on request. In the illustrative form of the system, the communication facility C comprises a public telephone facility and the individual terminals T1-Tn take various forms of existing telephone instruments. In that regard, the telephone terminal T1 is represented in some detail to include a hand piece 10 (microphone and earphone) and a panel 12 provided with a rectangular array of push buttons 14.

In accordance with conventional telephone designations, alphabetic and numeric designations are provided on the buttons 14. For example, several of the buttons 14 carry three letters along with a decimal numeral. Specifically, the button designated with the numeral "2" also carries the letters "A", "B", and "C". In that manner, the buttons 14 encompass the numerals "0-9", two symbols, and the alphabet except for the letters "Q" and "Z". Consequently, the buttons 14 accommodate entry of decimal data along with a wide range of alphabetic data. In that regard, the buttons 14 designated with symbols "*" and "#" as well as the numeral "0" can be used by predetermined assignment to represent the letters "Q" and "Z" or any of a variety of other data or commands. Generally in accordance herewith, the buttons 14 are employed to formulate digital data at the central station D in various formats determined by the current specific use of the system.

Considering the central station D in somewhat greater detail, the communication facility C is coupled to an interface unit 20 which incorporates modems, tone decoders, and switching mechanisms. The interface unit 20 affords couplings to a computer 22 which may take the form of a mini-unit programmed for example in accordance with the functions as set forth below. Generally, the computer 22 performs distinct and separate operations. Specifically, the computer 22 may initially qualify a caller. In that regard, if a select group of callers are to have access to the system, a key test unit 23 qualifies individual callers who present a key number. Subsequently, during a data acquisition phase, the computer 22 receives data from individual stations T1-Tn (through the communication facility C) which data is organized, identified, and stored. Thereafter, during a processing phase, the computer 22 processes the stored data applying additional data to isolate a select subset of callers.

Sub-blocks in addition to unit 23 also are illustrated in the block designating the computer 22 so as to represent various internal component operating units. In formulating the data records to be stored, the computer 22 employs logic operations which are performed by a sequencer and encoder 24. During statistical processing operations, the computer 22 utilizes a data test buffer 26 along with a statistical analysis program means 28. Exemplary operations and formats for these elements are treated below.

The computer 22 is connected to a voice generator 30 to selectively provide voice messages through the interface unit 20 and the communication facility C to a currently active remote terminal. Also, the computer 22 is coupled to a memory 32 containing a plurality of individual cells C1-Cn which are employed to register the data from individual callers at the terminals. Thus, during a data accumulation phase, the apparatus at the central station D acquires data in the memory 32 utilizing individual cells C1-Cn for the individual callers. Subsequently, during the statistical processing operation, the computer 22 receives data through a command terminal 34 which is tested with regard to the acquired data in the cells C1-Cn of memory 32 so as to select and identify a subset of the individual callers. Thus, the system is effective for use in statistical polling to selectively identify a particular subset of data associated with a subset of individual callers. In that regard, it is important to positively identify the isolated subset of callers and also to enable those callers to verify their identity. The system of the present invention accommodates those needs.

An appreciation of the philosophical operation of a system in accordance with the present invention may now be enhanced by considering an exemplary operation of the illustrative embodiment of FIGURE 1 to isolate a subset of people who are susceptible to a particular disease or infirmity. The exemplary operation might involve a geographical area, as a large city, in which a particular health problem is somewhat acute. For example, a major population center in which coronary artery disease is a major problem might be polled. Accordingly, persons most susceptible to such disease could be identified for corrective measures.

As an alternative example related to health, the system may process the resultant data from test kits. Specifically, test kits might be sold to concerned persons who would use the kit to obtain certain specific health data. For example, a person might purchase a kit containing the apparatus and instructions to perform various non-invasive procedures to obtain data that could indicate a health condition, e.g. pregnancy. The kit containing the apparatus could also include a key number for qualifying the purchaser to access the computer 22. The qualification would be performed by the key test unit 23 which might simply incorporate a look-up table to check off key numbers as they are used or "consumed".

Returning to the example mentioned above of a general polling for a population center, people of the metropolitan area would be informed of the availability of a service for statistical health analysis. Accordingly, persons interested in their individual statistical situation would be motivated to utilize the service. Specifically, individual callers would use the remote terminals T1-Tn to contact the central station D through the communication facility C and thereby provide personal information which would enable a statistical analysis in relation to existing data so as to isolate and inform those persons statistically most likely to be in need of corrective measures. In such applications, it may be important that the caller's identity be subject to reliable verification. Other applications may present a critical need for positively verifiable identification to the extent that credit card numbers and/or personal identification numbers may be employed.

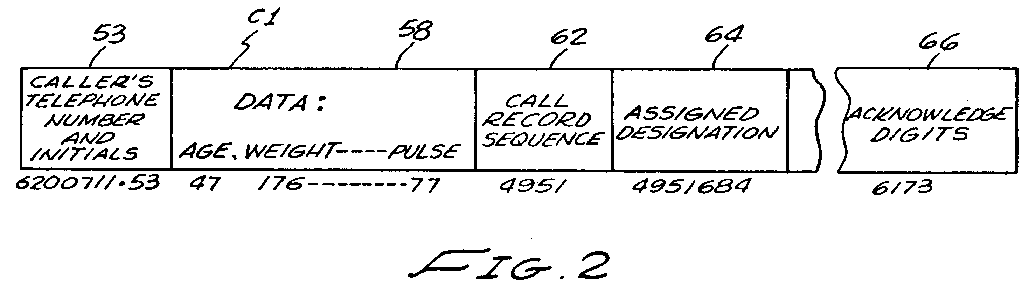

The exemplary operation, with regard to a specific caller, will now be treated referring somewhat concurrently to FIGURES 1, 2, and 3. As indicated above, FIGURE 2 indicates a data storage format and will now be considered with regard to a format in which data is composed in one of the cells C1-Cn of the memory 32.

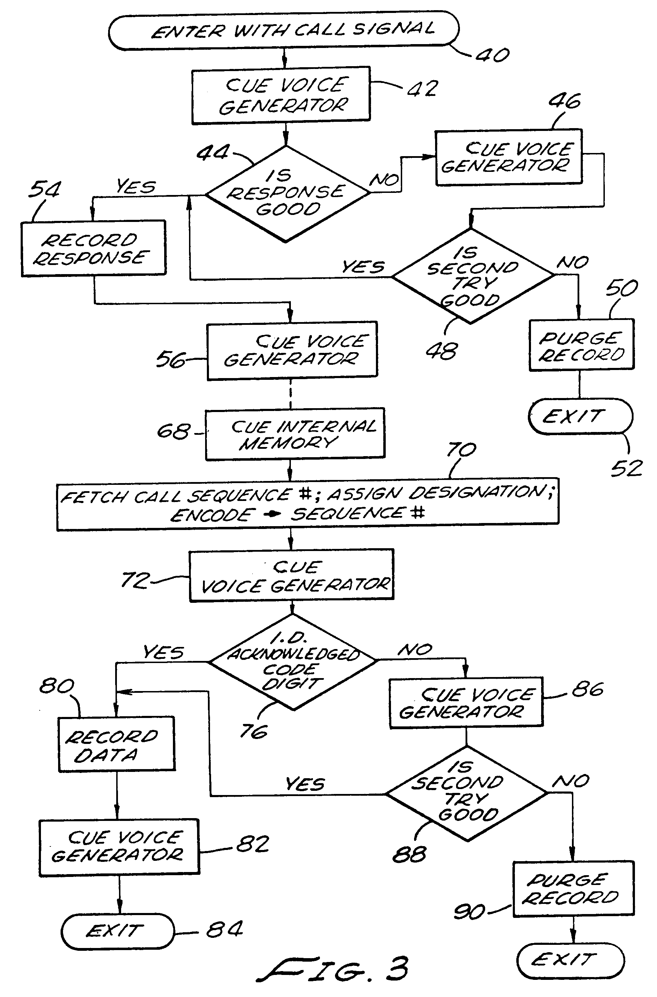

Pursuing the above example in accordance with the assumptions, further assume the existence of a caller at the remote terminal T1 who wishes to pursue health-related information on the basis of statistical analysis. The caller lifts the hand piece 10 and in accordance with conventional techniques actuates the push buttons 14 to establish communication through the facility C with the central station D. Upon receiving the call signal, the interface unit 20 (central station D, FIGURE 1) actuates the computer 22 to cue the voice generator 30. The sequence of operations is represented to be initiated in FIGURE 3 by the "enter" block 40 which is accordingly followed by a "cue voice generator" command block 42. Accordingly, the voice generator 30 (FIGURE 1) formulates speech, a representative form of which might be: "Thank you for participating in the coronary artery disease statistical analysis. Please give us your telephone number by actuating the' call buttons on your telephone instrument."

Acting on the instructions, the caller would push the buttons 14 in sequence to indicate his telephone number, e.g., "6200711". This data could be taken directly from the system as it is available in certain telephone apparatus of the facility C. The time of day also could be taken. The resulting data signals are communicated to the interface unit 20 (FIGURE 1) then applied to the computer 22 for testing as a valid telephone number. The test is indicated by the block 44 (FIGURE 3). If the response is not valid, for example, if it contains an inappropriate number of digits, the operating of block 46 is initiated again cuing the voice generator 30 (FIGURE 1). Accordingly, the voice generator reinstructs the caller, e.g.: "You have not entered a proper telephone number. Please reenter your telephone number by pressing the appropriate call buttons."

The caller is then allotted a predetermined period of time to make a proper entry with the consequence that the system moves to a test operation as indicated by the block 48 (FIGURE 3). Specifically, block, 48 poses the query: "Is the second try good?"

If the caller is again unsuccessful, the system purges the record as indicated by the block 50 and the call is terminated as indicated by the block 52. Conversely, if the caller responds with a proper telephone number, the operation sequences to record the response as indicated by the block 54. That is, the caller's telephone is recorded in a specific cell C1-Cn identified with the caller. The format of the cell C1 is indicated in FIGURE 2. The first portion, section 53, contains the caller's telephone number, i.e. "6200711". Note that as explained above, if the second attempt to formulate a proper number is successful, as manifest by the block 48 (FIGURE 3), the response is recorded at that stage. In either case, exiting from the block 54 (FIGURE 3) invokes the next operation of again cuing the voice generator as indicated by the block 56.

As an alternative, if a selective-group polling operation is performed, as mentioned above, the caller is qualified by providing the "one-time" key number included in his package. As indicated above, the unit 23 may incorporate a look-up table for proper key numbers. Proper numbers may be coded using any of a wide variety of techniques. As a simple illustrative example, the key may comprise a precise number of digits that always total a particular numerical value.

The key test unit 23 performs the test as an initial qualification. Next, the unit 23 verifies that the key given by a caller has not been consumed by prior use. Thus, the unit 23 may simply incorporate some arithmetic test capability along with a look-up table as well known in the art.

Returning to the detailed example, the process proceeds after the caller is qualified. Specifically, the cue to the voice generator 30 (FIGURE 1) as represented by the block 56 produces a request for further information from the caller. For example, the voice generator might request information by stating: "Please use the telephone buttons to indicate the initials of your first and last names using the asterisk button for the letters Q and Z."

The detailed operation is not represented in FIGURE 3 as it is similar to the operation illustrated by the blocks 42 through 54. However, again, a proper response is registered in the storage cell C1 as illustrated in FIGURE 2 by the number "53" also registered in the first section 53 of the cell.

The cycle of obtaining digital information from the caller next is repeated with respect to substantial specific health data. For example, as illustrated in FIGURE 2, the next section 58 in the cell C1 receives an accumulation of health data, including the caller's age, weight, ..., pulse rate, and so on. Representative digital numbers are illustrated in FIGURE 2.

During the course of the telephonic communication, the computer 22 formulates identification data for the caller specifically including: the chronological sequence of the call, the assigned designation of the call, and a set of acknowledgment digits for the call. Such data identification is registered in the assigned cell C1 in accordance with the format of FIGURE 2 being stored in sections 62, 64, and 66. Note that the data may be stored in a coded interrelationship. For example, the acknowledgment digits may be related to the call record sequence. In the illustrative example, the chronological order number of the caller is 4951. The acknowledge digits may be derived from that sequence number. For example, as illustrated, a coded relationship may be established by adding "two" to each of the individual record sequence digits. Considering the example numerically:

5

Adding without carries:

$$4951$$
$$\underline{2222}$$
$$6173$$

According to the example, the call chronological sequence registered for the caller is 4951 as represented in the section 62 while the acknowledge digits are 6173 as registered in the section 66. Additionally, the computer develops an assigned designation number, e.g. designation "4951684", which is registered in the section 64 and an acknowledge code or digits, e.g. 6173, registered in the section 66. These values are formulated in accordance with conventional number techniques during the data acquisition phase. Specifically, with the exemplary numerals formulated, the operation proceeds.

The computer 22 (FIGURE 1) cues the internal memory. That operation is indicated by the block 68 (FIGURE 3). Thus, the computer 22 fetches the call record sequence number, assigns a designation (if not previously assigned), and encodes the sequence number as the acknowledgement digits (if not previously accomplished). These operations are indicated by the block 70 (FIGURE 3). Next, the computer 22 (FIGURE 1) cues the voice generator as indicated by the block 72 (FIGURE 3) to provide information to the caller. Specifically, for example, the voice generator 30 (FIGURE 1) might state: "This transaction has been designated by the number 4951684, and is further identified by the acknowledgment digits 6173. Please make a record of these numbers as they will be repeated. Specifically, the designation number is 4951684. The acknowledgment digits are 6173. Please acknowledge this transaction by pressing your telephone buttons to indicate the acknowledge digits 6173." In various applications as those involving security, the order and acknowledgement of callers may be very important. Therefore, data for confirmation associated with the order is important.

The system must assume a test mode as indicated by the block 76 (FIGURE 3). If the caller provides the correct acknowledgment digits, the data is confirmed in the record as indicated by the block 80 and registered in the cell C1 (FIGURE 2). Additionally, the voice generator 30 (FIGURE 1) is sequenced as indicated by the block 82 (FIGURE 3), to indicate the close of the communication and that the transaction is terminated as represented by the exit block 84.

In the event that the caller cannot confirm his acknowledgment digits, as indicated by the block 76, a repeat operation is performed as indicated respectively by the blocks 86 and 88. Specifically, the voice generator 30 (FIGURE 1) is cued for a second instructional message. In the event that the second attempt also fails, the data is purged and the call discounted as indicated by block 90. If the second try is successful (test block 88), as indicated by the block 80, the record is perfected as indicated above.

As a result of the likelihood of a large number of calls, as described above, the data cells C1-Cn in the memory 32 (FIGURE 1) are developed with specific information indicative of a statistical sampling of the populace of concern. The data of that statistical sampling may be self-generating of specific conclusions with respect to a subset of individuals, and/or supplemental data may clearly manifest a significant subset. For example, the data may indicate a significant departure from an assumed normal characteristic. Such data, accumulated from the polling, may be considered by logic comparisons in the computer 22 to select the subset of persons who should be isolated.

In addition to the self-generating conclusions available from the received data, the system may involve the introduction of external data. In the physical fitness example, such external data might take the form of national statistical data. In any event, the processing operation usually involves comparison testing which compares caller data from individual cells C1-Cn with test data that is supplied to the statistical analysis program means 28 through the command terminal 34.

As a simplistic example, health data including age, weight, ... pulse, may be formulated into a composite number reflecting rated values for each of the data elements. Such a composite number may then be placed in the data test buffer 26 for sequential testing against similarly composed numbers formed from the data in the individual cells C1-Cn. Based on such comparative testing, a subset of persons may be identified. Presumably those persons will be informed of their circumstances. Note that the command terminal 34 incorporates a display or other output data apparatus as standard in the art for manifesting the subset. However, it is important that identifications be confirmed as accurate. It is in that sense that the assigned designations as registered in the section 64 (FIGURE 2) and the call record sequence, as registered in the block 62, are important. Note that multiple comparative processing operations may be desirable or necessary to isolate and confirm a subset of significant concern.

In the above example, members of the public were simply invited to use the service. A number of alternatives exist which might well impact on the statistical analysis. For example, callers might be restricted to the purchasers of a specific product as a medical apparatus for measuring blood pressures, heart rates, or so on. In such situations, it will be apparent that the statistical data will be somewhat distorted from an average or normal sampling. Clearly, the computer 22 can be programmed to take into account such considerations. In that regard, the computer 22 might also verify identification data proffered by a caller. Such data might take the form of a credit card number or a personal identification number. Various techniques for verification of such numbers using computer techniques are well known and recognized in the prior art. In any event, a wide variety of possibilities, applications, and formats in accordance herewith will be apparent to those skilled in the art wherein data is assembled, stored, identified, processed by testing to isolate a subset or manifest data with sources reliably confirmed. For example, merchandising, polling, selecting, and related operations are practical.

In view of the above explanation of the exemplary system, it will be appreciated that embodiments of the present invention may be employed in many applications to accumulate statistical data, process such data, and define subsets of callers of concern. While certain exemplary operations have been stated herein, and certain detailed structures have been disclosed, the appropriate scope hereof is deemed to be in accordance with the claims as set forth below.

**Claims**

1.  A method of data-analysis in which calls from a multiplicity of terminals (T1-Tn) of a communications facility (C) are received at a receiving station (D), automated voice response to each call is made from the receiving station (D) to the calling terminal (T1) prompting the caller to transmit digital-signal data to the receiving station (D) via the communications facility (C), digital-signal data transmitted via the communications facility (C) by the caller in response to the prompting is received at the receiving station (D) for processing, this digital-signal data is stored (C1) at the receiving station (D) in association with a caller-identification (53), and the data stored (C1-Cn) in relation to a multiplicity of calls is analyzed (28), characterised in that the caller-identification (53) and the prompted-response data (58) of each call are stored in a memory file or cell (C1) that is assigned individually to the caller, that a digital representation (62) in accordance with the timing or other sequence-order of the individual call is derived (70) and stored in that cell (C1), and that the analysis is related to the contents of the individual memory cells (C1-Cn) such as to isolate a subset of the callers.

2.  A method according to Claim 1 wherein the caller is prompted (42) to transmit to the receiving station (D) a key code made known to the caller other than during the call, the key code transmitted by the caller in response to the prompting (42) is checked (44) at the receiving station (D) to determine whether it satisfies a predetermined condition, and the receiving station (D) proceeds to prompt (56) the caller to transmit the digital-signal data (58) to the receiving station (D) only in the event that the said condition is satisfied.

3.  A method according to Claim 2 wherein the checking (44) of the key code is carried out by determining whether it has correspondence with any of a multiplicity of key codes stored (23) at the receiving station (D), and the number of times each stored key code is available for use to satisfy said condition is restricted.

4.  A method according to any one of Claims 1 to 3 wherein the communications facility is a public telephone network (C), each caller is prompted (42) to transmit to the receiving station (D) the telephone number (T1-Tn) from which they are calling, the telephone number received by the receiving station (D) in response to the prompting is checked (44) in the receiving station (D) for validity, and the receiving station (D) proceeds to prompt (56) the caller to transmit said digital-signal data to the receiving station (D) only in the event that the telephone number is determined valid.

5.  A method according to any one of Claims 1 to 4 wherein each call is assigned (70) a respective call designation number in the receiving station (D), and the designation number assigned to each individual call is stored (64) in the memory cell (C1) individual to the respective caller and is communicated to the caller from the receiving station (D) during the call.

6.  A method according to Claim 5 wherein the call designation number (64) assigned to each individual call is derived in the receiving station (D) in dependence upon the timing or other sequence-order representation (62) of that call.

7. A method according to any one of Claims 1 to 6 wherein the receiving station (D) acts in respect of each call for which data has been stored in an assigned memory cell (C1-Cn), to prompt (72) the caller to transmit back to the receiving station (D) an acknowledgement code (66) specified in the prompting, and that the receiving station (D) checks (76) that the caller transmits the acknowledgement code as prompted.

8. A method according to Claim 7 wherein the acknowledgement code (66) specified is derived in the receiving station (D) in dependence upon the timing or other sequence-order representation (62) of the respective call.

9. A method according to Claim 7 or Claim 8 wherein said digital-signal data received in respect of each call is retained as recorded data (58) at the end of the call only in the event that the receiving station (D) receives the acknowledgement code (66) as prompted, from the caller.

10. A method according to Claim 9 wherein the analysis to isolate a subset is carried out using the recorded data retained in respect of a multiplicity of calls.

11. A system for data analysis in which calls from a multiplicity of terminals (T1-Tn) of a communications facility (C) are received at a receiving station (D), automated voice response to each call is made from the receiving station (D) to the calling terminal (T1) prompting the caller to transmit digital-signal data to the receiving station (D) via the communications facility (C), digital-signal data transmitted via the communications facility (C) by the caller in response to the prompting is received at the receiving station (D) for processing, this digital-signal data is stored (C1) at the receiving station (D) in association with a caller-identification (53), and the data stored (C1-Cn) in relation to a multiplicity of calls is analyzed (28), characterised in that the receiving station (D) includes memory means (32) having a plurality of memory files or cells (C1-Cn) and means (22) to assign the memory cells (C1-Cn) to individual callers and to store the caller-identification (53) and the prompted-response data (58) received in each individual call in the memory cell (C1) assigned to the caller, that means (24) at the receiving station (D) derives a digital representation in accordance with the timing or other call sequence-order of each call and enters that representation (62) into the memory cell (C1) assigned to the caller, and that programmed means (28) carries out said analysis in accordance with the contents of the individual memory cells (C1-Cn) such as to isolate a subset of the callers.

12. A system according to Claim 11 wherein voice-generator means (30) at the receiving station (D) prompts the caller to transmit to the receiving station (D) a key code, the receiving station (D) includes means (23) to check the key code transmitted by the caller in response to the prompting to determine whether it satisfies a predetermined condition, and the voice-generator means (30) is activated to prompt the caller to transmit the digital-signal data (58) to the receiving station (D) only in the event that the said condition is satisfied.

13. A system according to Claim 12 wherein the key-code checking means (23) checks the key code to determining whether it has correspondence with any of a multiplicity of key codes stored at the receiving station (D), and the number of times each stored key code is available for use to satisfy said condition is restricted.

14. A system according to any one of Claims 11 to 13 wherein the communications facility is a public telephone network (C).

15. A system according to any one of Claims 11 to 14 wherein each call is assigned (70) a respective call designation number in the receiving station (D), and the designation number assigned to each individual call is stored (64) in the memory cell (C1) individual to the respective caller and is communicated to the caller from the receiving station (D) during the call.

16. A system according to Claim 15 wherein the call designation number assigned to each individual call is derived in the receiving station (D) in dependence upon the timing or other sequence-order representation of that call.

**17.** A system according to any one of Claims 11 to 16 wherein the receiving station (D) acts during each call for which data has been stored in an individual one of the memory cells (C1-Cn), to prompt the caller to transmit back to the receiving station (D) an acknowledgement code specified in the prompting, and that the receiving station (D) checks that the caller transmits the acknowledgement code as prompted.

**Patentansprüche**

**1.** Verfahren zur Datenanalyse, wobei Rufe von mehreren Endgeräten (T1-Tn) einer Kommunikationseinrichtung (C) an einer Empfangsstation (D) empfangen werden, wobei in Antwort auf jeden Ruf eine automatische Sprachausgabe von der Empfangsstation (D) zum rufenden Endgerät (T1) erfolgt, durch die der Anrufer aufgefordert wird, digitale Signaldaten über die Kommunikationseinrichtung (C) an die Empfangsstation (D) zu senden, die durch den Anrufer in Antwort auf die Eingabeaufforderung über die Kommunikationseinrichtung (C) gesendeten digitalen Signaldaten an der Empfangsstation (D) empfangen werden, um sie zu verarbeiten, diese digitalen Signaldaten an der Empfangsstation (D) in Verbindung mit einer Anrufer-Identifizierung (53) gespeichert werden (C1), und die mehreren Rufen zugeordneten gespeicherten Daten (C1-Cn) analysiert werden (28),
**dadurch gekennzeichnet, daß**
die Anrufer-Identifizierung (53) und die Eingabeaufforderungs-Antwortdaten (58) jedes Rufs in einer Speicherdatei bzw. -zelle (C1) gespeichert werden, die dem Anrufer individuell zugeordnet ist, eine digitale Darstellung (62) gemäß der chronologischen oder einer anderen Reihenfolge des einzelnen Rufs hergeleitet (70) und in dieser Zelle (C1) gespeichert wird, und die Analyse auf die Inhalte der einzelnen Speicherzellen (C1-Cn) bezogen ist, um eine Untergruppe von Anrufern zu separieren.

**2.** Verfahren nach Anspruch 1, wobei der Anrufer aufgefordert wird (42) an die Empfangsstation (D) einen dem Anrufer bekanntgegebenen Schlüsselcode zu senden, der von einem während des Gesprächs mitgeteilten Schlüsselcode verschieden ist, wobei der durch den Anrufer in Antwort auf die Eingabeaufforderung (42) gesendete Schlüsselcode an der Empfangsstation (D) überprüft wird (44), um festzustellen, ob der Code eine vorgegebene Bedingung erfüllt, und wobei die Empfangsstation (D) den Anrufer anschließend nur dann auffordert (56), die digitalen Signaldaten (58) an die Empfangsstation (D) zu senden, wenn die Bedingung erfüllt ist.

**3.** Verfahren nach Anspruch 2, wobei die Überprüfung (44) des Schlüsselcodes durchgeführt wird, indem festgestellt wird, ob der Code mit einem der mehreren an der Empfangsstation (D) gespeicherten (23) Schlüsselcodes übereinstimmt, wobei die Anzahl begrenzt ist, wie oft jeder gespeicherte Schlüsselcode für die Verwendung zur Überprüfung der Bedingung verfügbar ist.

**4.** Verfahren nach einem der Ansprüche 1 bis 3, wobei die Kommunikationseinrichtung ein öffentliches Telefonnetz (C) ist, wobei jeder Anrufer aufgefordert wird (42), an die Empfangsstation (D) die Telefonnummer (T1-Tn) zu senden, von der aus der Ruf erfolgt, die Gültigkeit der durch die Empfangsstation (D) in Antwort auf die Eingabeaufforderung empfangenen Telefonnummer in der Empfangsstation (D) überprüft wird (44), und die Empfangsstation (D) daraufhin den Anrufer nur dann auffordert (56), die digitalen Signaldaten an die Empfangsstation (D) zu senden, wenn die Gültigkeit der Telefonnummer festgestellt wurde.

**5.** Verfahren nach einem der Ansprüche 1 bis 4, wobei jedem Ruf in der Empfangsstation (D) eine entsprechende Rufkennungsnummer zugeordnet wird (70), wobei die jedem individuellen Ruf zugeordnete Kennungsnummer individuell für den jeweiligen Anrufer in der Speicherzelle (C1) gespeichert (64) und während des Gesprächs dem Anrufer durch die Empfangsstation (D) mitgeteilt wird.

**6.** Verfahren nach Anspruch 5, wobei die jedem individuellen Ruf zugeordnete Rufkennungsnummer (64) in der Empfangsstation (D) in Abhängigkeit der chronologischen oder einer anderen Reihenfolge (62) dieses Rufs hergeleitet wird.

**7.** Verfahren nach einem der Ansprüche 1 bis 6, wobei die Empfangsstation (D) bezüglich jedes Rufs anspricht, für den in einer zugeordneten Speicherzelle (C1-Cn) Daten gespeichert sind, um den Anrufer aufzufordern (72), an die Empfangsstation (D) einen bei der Eingabeaufforderung festgelegten Bestätigungscode (66) zurückzusenden, und die Empfangsstation (D) überprüft (76), ob der Anrufer den Bestätigungscode gemäß der Aufforderung sendet.

8. Verfahren nach Anspruch 7, wobei der festgelegte Bestätigungscode (66) in der Empfangsstation (D) in Abhängigkeit von einer Darstellung (62) der chronologischen oder einer anderen Reihenfolge des jeweiligen Rufs hergeleitet wird.

9. Verfahren nach Anspruch 7 oder 8, wobei die bezüglich jedes Rufs empfangenen digitalen Signaldaten am Ende des Gesprächs nur dann als aufgezeichnete Daten (58) gespeichert werden, wenn die Empfangsstation (D) vom Anrufer den Bestätigungscode (66) gemäß der Aufforderung empfängt.

10. Verfahren nach Anspruch 9, wobei die Analyse zum Separieren einer Untergruppe unter Verwendung der bezüglich mehrerer Rufe gespeicherten, aufgezeichneten Daten durchgeführt wird.

11. System zur Datenanalyse, wobei Rufe von mehreren Endgeräten (T1-Tn) einer Kommunikationseinrichtung (C) an einer Empfangsstation (D) empfangen werden, wobei von der Empfangsstation (D) in Antwort auf jeden Ruf eine automatische Sprachausgabe zum rufenden Endgerät (T1) erfolgt, durch die der Anrufer aufgefordert wird, digitale Signaldaten über die Kommunikationseinrichtung (C) an die Empfangsstation (D) zu senden, die durch den Anrufer in Antwort auf die Eingabeaufforderung über die Kommunikationseinrichtung (C) gesendeten digitalen Signaldaten an der Empfangsstation (D) empfangen werden, um sie zu verarbeiten, diese digitalen Signaldaten an der Empfangsstation (D) in Verbindung mit einer Anrufer-Identifizierung (53) gespeichert werden (C1), und die mehreren Rufen zugeordneten gespeicherten Daten (C1-Cn) analysiert werden (28),
**dadurch gekennzeichnet, daß**
die Empfangsstation (D) eine Speichereinrichtung (32) mit mehreren Speicherdateien oder -zellen (C1-Cn) sowie eine Einrichtung (22) aufweist, um die Speicherzellen (C1-Cn) individuellen Anrufern zuzuordnen und die Anrufer-Identifizierung (53) und die bei jedem individuellen Ruf empfangenen Eingabeaufforderungs-Antwortdaten (58) in der dem Anrufer zugeordneten Speicherzelle (C1) zu speichern; eine Einrichtung (24) an der Empfangsstation (D) eine digitale Darstellung gemäß der chronologischen oder einer anderen Reihenfolge jedes Rufs herleitet und diese Darstellung (62) der dem Anrufer zugeordneten Speicherzelle (C1) zuführt; und eine programmierte Einrichtung (28) die Analyse gemäß den Inhalten der individuellen Speicherzellen (C1-Cn) durchführt, um eine Untergruppe der Anrufer zu separieren.

12. System nach Anspruch 11, wobei eine Spracherzeugungseinrichtung (30) an der Empfangsstation (D) den Anrufer auffordert, einen Schlüsselcode an die Empfangsstation (D) zu senden, wobei die Empfangsstation (D) eine Einrichtung (23) zum Überprüfen des durch den Anrufer in Antwort auf die Eingabeaufforderung gesendeten Schlüsselcodes aufweist, um festzustellen, ob der Code eine vorgegebene Bedingung erfüllt, und die Spracherzeugungseinrichtung (30) nur dann aktiviert wird, um den Anrufer aufzufordern, die digitalen Signaldaten (58) an die Empfangsstation (D) zu senden, wenn die Bedingung erfüllt ist.

13. System nach Anspruch 12, wobei die Schlüsselcode-Prüfeinrichtung (23) den Schlüsselcode überprüft, um festzustellen, ob der Code mit einem von mehreren an der Empfangsstation (D) gespeicherten Schlüsselcodes übereinstimmt, wobei die Anzahl begrenzt ist, wie oft jeder gespeicherte Schlüsselcode für die Verwendung zur Überprüfung der Bedingung verfügbar ist.

14. System nach einem der Ansprüche 11 bis 13, wobei die Kommunikationseinrichtung ein öffentliches Telefonnetz (C) ist.

15. System nach einem der Ansprüche 11 bis 14, wobei jedem Ruf in der Empfangsstation (D) jeweils eine Rufkennungsnummer zugewiesen wird (70), wobei die jedem individuellen Ruf zugeordnete Rufkennungsnummer in einer für den Anrufer individuellen Speicherzelle (C1) gespeichert (64) und dem Anrufer während des Gesprächs durch die Empfangsstation (D) mitgeteilt wird.

16. System nach Anspruch 15, wobei die jedem individuellen Ruf zugeordnete Rufkennungsnummer in der Empfangsstation (D) in Abhängigkeit von der chronologischen oder einer anderen Reihenfolge dieses Rufs hergeleitet wird.

17. System nach einem der Ansprüche 11 bis 16, wobei die Empfangsstation (D) während jedes Rufs anspricht, für den Daten in einer individuellen Speicherzelle (C1-Cn) gespeichert wurden, um den Anrufer aufzufordern, einen bei der Eingabeaufforderung festgelegten Bestätigungscode an die Empfangsstation (D) zurückzusenden, und wobei die Empfangsstation (D) überprüft, ob der Anrufer den Bestätigungscode gemäß der Aufforderung gesendet hat.

**Revendications**

1. Méthode d'analyse des données, dans laquelle des appels en provenance d'une multiplicité de terminaux (T1-Tn) d'un réseau de communication (C) sont reçus à une station réceptrice (D), une réponse vocale automatique à chaque appel est envoyée de la station réceptrice (D) au terminal de l'appelant (T1), invitant l'appelant à envoyer des données de signaux numériques à la station réceptrice (D) par l'intermédiaire du réseau de communication (C), des données de signaux numériques transmises par l'intermédiaire du réseau de communication (C) par l'appelant en réponse à l'invitation qui lui est faite sont reçues à la station réceptrice (D) à des fins de traitement, ces données de signaux numériques sont stockées (C1) à la station réceptrice (D) en association avec l'identification de l'appelant (53), et les données stockées (C1-Cn) relatives à une multiplicité d'appels sont analysées (28), caractérisée en ce que l'identification de l'appelant (53) et les données de réponse à l'invitation (58) de chaque appel sont stockées dans un fichier ou élément de mémoire (C1) qui est assigné individuellement à l'appelant, en ce qu'une représentation numérique (62) fonction de l'instant ou d'un autre ordre séquentiel de l'appel individuel est dérivée (70) et stockée dans cet élément (C1) et en ce que l'analyse est relative aux contenus des éléments de mémoire individuels (C1-Cn) de façon à isoler un sous-groupe des appelants.

2. Méthode selon la revendication 1, dans laquelle l'appelant est invité (42) à transmettre à la station réceptrice (D) un code indicatif connu de l'appelant autrement que pendant l'appel, le code indicatif transmis par l'appelant en réponse a l'invitation (42) est vérifié (44) à la station réceptrice (D) pour déterminer s'il satisfait une condition prédéterminée, et la station réceptrice (D) continue pour inviter (56) l'appelant à transmettre les données de signaux numériques (58) à la station réceptrice (D) seulement dans le cas où cette condition est satisfaite.

3. Méthode selon la revendication 2, dans laquelle la vérification (44) du code indicatif est effectuée en déterminant s'il correspond à l'un quelconque d'une multiplicité de codes indicatifs stockés (23) à la station réceptrice (D), et le nombre de fois que chaque code indicatif stocké est disponible pour être utilisé afin de satisfaire cette condition est limité.

4. Méthode selon l'une quelconque des revendications 1 à 3, dans laquelle le réseau de communication est un réseau de téléphone public (C), chaque appelant est invité (42) à transmettre à la station réceptrice (D) le numéro de téléphone (T1-Tn) d'où il appelle, le numéro de téléphone reçu par la station réceptrice (D) en réponse à l'invitation est vérifié (44) à la station réceptrice (D) pour être validé, et la station réceptrice (D) continue pour inviter (56) l'appelant à transmettre les données de signaux numériques à la station réceptrice (D) seulement dans le cas où le numéro de téléphone est déterminé comme étant valide.

5. Méthode selon l'une quelconque des revendications 1 à 4, dans laquelle chaque appel reçoit (70) un numéro de désignation d'appel respectif dans la station réceptrice (D), et le numéro de désignation assigné à chaque appel individuel est stocké (64) dans l'élément de mémoire (C1) particulier à l'appelant respectif et est communiqué à l'appelant par la station réceptrice (D) pendant l'appel.

6. Méthode selon la revendication 5, dans laquelle le numéro de désignation de l'appel (64) assigné à chaque appel individuel est dérivé dans la station réceptrice (D) en fonction de la représentation de l'instant ou d'un ordre autre séquentiel (62) de cet appel.

7. Méthode selon l'une quelconque des revendications 1 à 6, dans laquelle la station réceptrice (D) agit vis-à-vis de chaque appel pour lequel des données ont été stockées dans un élément de mémoire assigné (C1-Cn) pour inviter (72) l'appelant à lui transmettre en retour un code de confirmation (66) spécifié dans l'invitation, et dans laquelle la station réceptrice (D) vérifie (76) que l'appelant transmet le code de confirmation comme il y a été invité.

**8.** Méthode selon la revendication 7, dans laquelle le code de confirmation (66) spécifié est dérivé dans la station réceptrice (D) en fonction de la représentation de l'instant ou d'un autre ordre séquentiel (62) de l'appel respectif.

**9.** Méthode selon la revendication 7 ou la revendication 8, dans laquelle les données de signaux numériques reçues en ce qui concerne chaque appel sont conservées comme données enregistrées (58) à la fin de l'appel seulement dans le cas où la station réceptrice (D) reçoit le code de confirmation (66) de l'appelant, comme il y a été invité.

**10.** Méthode selon la revendication 9, dans laquelle l'analyse pour isoler un sous-groupe est effectuée en utilisant les données enregistrées conservées en ce qui concerne une multiplicité d'appels.

**11.** Système pour une analyse des données, dans lequel les appels en provenance d'une multiplicité de terminaux (T1-Tn) d'un réseau de communication (C) sont reçus à une station réceptrice (D), une réponse vocale automatique à chaque appel est envoyée de la station réceptrice (D) au terminal de l'appelant (T1) invitant l'appelant à transmettre des données de signaux numériques à la station réceptrice (D) par l'intermédiaire du réseau de communication (C), les données de signaux numériques transmis par l'intermédiaire du réseau de communication (C) par l'appelant en réponse à l'invitation qui lui est faite sont reçues à la station réceptrice (D) à des fins de traitement, ces données de signaux numériques sont stockées (C1) à la station réceptrice (D) en association avec une identification de l'appelant (53) et les données stockées (C1-Cn) concernant une multiplicité d'appels sont analysées (28), caractérisé en ce que la station réceptrice (D) comprend des moyens de mémoire (32) ayant une multiplicité de fichiers ou d'éléments de mémoire (C1-Cn) et des moyens (22) pour assigner les éléments de mémoire (C1-Cn) à des appelants individuels et pour stocker l'identification de l'appelant (53) et les données de réponse à l'invitation (58) reçues dans chaque appel individuel dans l'élément de mémoire (C1) assigné à l'appelant, en ce que des moyens (24) à la station réceptrice (D) dérivent une représentation numérique fonction de l'instant ou d'un autre ordre de séquence d'appels de chaque appel et introduisent cette représentation (62) dans l'élément de mémoire (C1) assigné à l'appelant, et en ce que des moyens programmés (28) effectuent cette analyse en fonction des contenus des éléments de mémoire individuels (C1-Cn) de façon à isoler un sous-groupe d'appelants.

**12.** Système selon la revendication 11, dans lequel un générateur vocal (30) situé à la station réceptrice (D) invite l'appelant à transmettre à la station réceptrice (D) un code indicatif, la station réceptrice (D) contient des moyens (23) pour vérifier le code indicatif transmis par l'appelant en réponse à l'invitation qui lui est faite pour déterminer si ce code satisfait une condition prédéterminée, et le générateur vocal (30) est activé pour inviter l'appelant à transmettre les données de signaux numériques (58) à la station réceptrice (D) seulement dans le cas où cette condition est satisfaite.

**13.** Système selon la revendication 12, dans lequel les moyens de vérification du code indicatif (23) vérifient le code indicatif pour déterminer s'il correspond à l'un quelconque d'une multiplicité de codes indicatifs stockés à la station réceptrice (D), et le nombre de fois que chaque code indicatif stocké est disponible pour être utilisé pour satisfaire cette condition est limité.

**14.** Système selon l'une quelconque des revendications 11 à 13, dans lequel le réseau de communication est un réseau de téléphone public (C).

**15.** Système selon l'une quelconque des revendications 11 à 14, dans lequel chaque appel reçoit (70) un numéro de désignation d'appel respectif dans la station réceptrice (D) et le numéro de désignation assigné à chaque appel individuel est stocké (64) dans l'élément de mémoire (C1) particulier à l'appelant respectif et est communiqué à l'appelant par la station réceptrice (D) pendant l'appel.

**16.** Système selon la revendication 15, dans lequel le numéro de désignation de l'appel assigné à chaque appel individuel est dérivé dans la station réceptrice (D) en fonction de la représentation de l'instant ou d'un autre ordre séquentiel des cet appel.

**17.** Système selon l'une quelconque des revendications 11 à 16, dans lequel la station réceptrice (D) agit pendant chaque appel pour lequel des données ont été stockées dans un élément individuel de la multiplicité d'éléments de mémoire (C1-Cn) pour inviter l'appelant à lui transmettre en retour un code de confirmation spécifié dans l'invitation, et dans lequel la station réceptrice (D) vérifie que l'appelant transmet le code de combinaison comme il y a été invité.

REMOTE TERMINAL T1

CENTRAL STATION

1 | ABC 2 | DEF 3
GHI 4 | JKL 5 | MNO 6
PRS 7 | TUV 8 | WXY 9
* | O | #

COMMUNICATION FACILITY

INTERFACE UNIT (TONE DECODER AND SWITCHING)

COMMAND TERMINAL

KEY TEST UNIT

COMPU-TER

STATISTICAL ANALYSIS PROGRAM MEANS (COMPARATOR)

SEQUENCER AND ENCODER

DATA TEST BUFFER

VOICE GENERATOR

MEMORY

CELL C1

CELL C2

CELL Cn

REMOTE TERMINAL T2

REMOTE TERMINAL Tn

FIG. 1

EP 0 229 170 B1

| CALLER'S TELEPHONE NUMBER AND INITIALS | DATA : AGE, WEIGHT----PULSE | CALL RECORD SEQUENCE | ASSIGNED DESIGNATION | ACKNOWLEDGE DIGITS |
|---|---|---|---|---|
| 6200711·53 | 47    176--------77 | 4951 | 4951684 | 6173 |

53    C1    58    62    64    66

FIG. 2

FIG. 3